# EUROPEAN PATENT APPLICATION

(11) **EP 3 404 603 A1**
(43) Date of publication of application: **21.11.2018**
(21) Application number: 18172247.1
(22) Date of filing: 15.05.2018
(51) Int. Cl.: G06Q 20/20

(54) **PACKAGE MEASUREMENT APPARATUS AND METHOD OF CONTROLLING THE SAME**

(30) Priority: 15.05.2017 JP 2017096702
(71) Applicant: Toshiba TEC Kabushiki Kaisha, Tokyo 141-8562 (JP)
(72) Inventor: ADACHI, Tarou, Shinagawa-ku, Tokyo 141-8562 (JP); KAMIO, Haruo, Shinagawa-ku, Tokyo 141-8562 (JP); TODA, Mitsuyuki, Shinagawa-ku, Tokyo 141-8562 (JP); MIMURA, Yusuke, Shinagawa-ku, Tokyo 141-8562 (JP)
(74) Representative: Takeuchi, Maya

(57) **Abstract**

A package measurement apparatus according to an embodiment includes a housing having a first surface that supports a package to be placed thereon and a second surface above the first surface. A touch panel display is mounted on the second surface and is positioned facing upward. A camera is positioned to capture an image of the package when the package is placed on the first surface and configured to generate image data corresponding to the captured image.

## Description

### FIELD

Embodiments described herein relate generally to a package measurement apparatus and a method of controlling the same.

### BACKGROUND

Various technologies for labor-saving in connection with receiving a package for transportation are proposed.

However, the various technologies assume that only a package to which an invoice is attached can be received, and a package to which an invoice is not attached cannot be received for transportation.

### SUMMARY OF INVENTION

To solve the above-cited problems, there is provided a package measurement apparatus comprising:
a housing that supports a package to be placed thereon;
a touch panel display mounted on the housing;
a camera positioned to capture an image of the package when the package is supported on the housing and configured to generate image data corresponding to the captured image; and
a processor configured to:
   receive the generated image data,
   determine a size of the package based on the image data,
   determine if an image of an invoice on the package can be extracted from the image data,
   if the image of the invoice can be extracted from the image data, extract the image of the invoice and output a payment request to a payment device, the payment request including instructions to perform a payment processing based on the extracted image of the invoice, and
   if the image of the invoice cannot be extracted from the image data, output an issuance request to a printing device, the issuance request including instructions to print an invoice based on the determined size of the package.

Preferably the housing may include a first surface that supports the package placed thereon and a second surface in which the touch panel display is mounted.

Preferably the processor may further be configured to, if the image of the invoice cannot be extracted from the image data, output a notification to a user that the invoice is not attached to the package.

Preferably the notification may be displayed on the touch panel display.

Preferably yet the processor may further be configured to, if the image of the invoice can be extracted from the image data:
after extracting the image of the invoice from the image data, determine whether complete invoice information can be determined from the extracted image of the invoice,
if the complete invoice information cannot be determined from the extracted image of the invoice, output, for display on the touch panel display, a notification to the user that the invoice information is incomplete, and
if the complete invoice information can be determined from the extracted image of the invoice, output the payment request to the payment device.

Preferably still, if the image of the invoice cannot be extracted from the image data, or if the complete invoice information cannot be determined from the extracted image of the invoice, the processor may control the touch panel display to display a graphic user interface (GUI) allowing the user to select whether to complete the invoice information via the payment apparatus or to end processing.

Preferably the apparatus according to the embodiments may further comprise a weight measurement instrument configured to acquire a weight measurement of the package positioned on the housing,
wherein the processor may further be configured to receive the weight measurement, the issuance request being further based on the received weight measurement.

Preferably the issuance request may further include instructions to perform the payment processing based on the determined size of the package.

Preferably the apparatus according to the embodiments may further comprise a printer, wherein the processor may further be configured to, if the image of the invoice cannot be extracted, control the printer to print a reception slip including a package code, the issuance request further including instructions to print the package code with the invoice.

Preferably the apparatus according to the embodiments may further comprise a communication interface configured to communicate with a package management server,
wherein the processor may further be configured to transmit, to the package management server, the package code, the generated image data, and invoice data based on one of: the issuance request and the extracted image of the invoice.

In another exemplary embodiment there is also provided a method of measuring a package using a package measurement apparatus that includes a housing that supports a package placed thereon, a touch panel display mounted on the housing, and a camera positioned to capture an image of a package placed on the housing, the method comprising:
generating image data corresponding to the image of the package captured by the camera;
determining a size of the package based on the image data;
determining if an image of an invoice on the package can be extracted from the image data;
if the image of the invoice can be extracted from the image data, extracting the image of the invoice and outputting a payment request to a payment device, the payment request including instructions to perform a payment processing based on the extracted image of the invoice; and
if the image of the invoice cannot be extracted from the image data, outputting an issuance request to a printing device, the issuance request including instructions to print an invoice based on the determined size of the package.

Preferably the method according to the embodiment may further comprise:
if the image of the invoice cannot be extracted from the image data, outputting a notification to a user that the invoice is not attached to the package.

Preferably the method according to the embodiments may further comprise:
if the image of the invoice can be extracted from the image data:
   after extracting the image of the invoice from the image data, determining whether complete invoice information can be determined from the extracted image of the invoice,
if the complete invoice information cannot be determined from the extracted image of the invoice, outputting, for display on the touch panel display, a notification to the user that the invoice information is incomplete, and
if the complete invoice information can be determined from the extracted image of the invoice, outputting the payment request to the payment device.

Preferably the method according to the embodiments may further comprise:
if the image of the invoice cannot be extracted from the image data, or if the complete invoice information cannot be determined from the extracted image of the invoice, displaying on the touch panel display a graphic user interface (GUI) allowing the user to select whether to complete the invoice information via the payment apparatus or to end processing.

Preferably the method according to the embodiments may further comprise:
acquiring a weight measurement of the package positioned on the housing, wherein the issuance request is further based on the acquired weight measurement.

Preferably the instructions to perform the payment processing may further be based on the determined size of the package.

Preferably yet the method according to the embodiments may further comprise:
if the image of the invoice cannot be extracted from the image data, controlling a printer in the package measurement apparatus to print a reception slip including a package code, the issuance request further including instructions to print the package code with the invoice.

Preferably still the method according to the embodiments may further comprise:
transmitting, to a package management server, the package code, the generated image data, and invoice data based on one of the issuance request and the extracted image of the invoice.

Preferably the payment request and the issuance request may be output to a single payment processing apparatus that includes the payment device and the printing device.

Preferably the generated image data corresponding to the image of the package captured by the camera may be three-dimensional image data that includes depth-direction information.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a perspective view illustrating an example of a package receiving system according to an embodiment.
FIG. 2 is a perspective view illustrating an example of use of the package receiving system that is illustrated in FIG. 1.
FIG. 3 is a block diagram illustrating example hardware configurations of a measurement apparatus and a payment apparatus that are illustrated in FIGs. 1 and 2.
FIG. 4 is an example sequence of operations performed by a processor that is provided in the measurement apparatus that is illustrated in FIG. 3.
FIG. 5 is an example sequence of operations performed by a processor that is provided in the payment apparatus that is illustrated in FIG. 3.

### DETAILED DESCRIPTION

Embodiments provide a package measurement apparatus that is capable of supporting reception of both a package to which an invoice is attached and a package to which an invoice is not attached, for transportation, and a method of controlling the measurement apparatus.

A package measurement apparatus according to an embodiment includes a housing having a first surface that supports a package to be placed thereon and a second surface above the first surface. A touch panel display is mounted on the second surface and is positioned facing upward. A camera is positioned to capture an image of the package when the package is placed on the first surface and configured to generate image data corresponding to the captured image.

An example of an embodiment will be described below with reference to the drawings. In the present embodiment, as an example, a package receiving system configured to include the measurement apparatus is described.

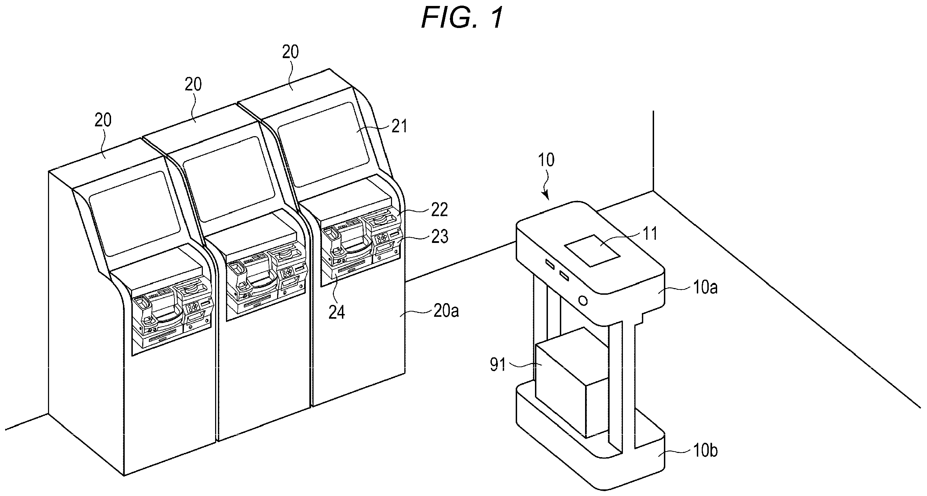

FIG. 1 is a perspective view illustrating an example of a package receiving system 100 according to the present embodiment.

The package receiving system 100 includes one or more measurement apparatuses 10 and one or more payment apparatuses 20. In FIG. 1, one measurement apparatus 10 and three payment apparatuses 20 are illustrated. Any number of measurement apparatuses 10 and any number of payment apparatuses 20 may be included in the package receiving system 100.

The measurement apparatus 10 measures a size and a weight of a package 91 that is a reception target for transportation. If an invoice is attached to the package 91, the measurement apparatus recognizes invoice information that is described on the invoice. The invoice information includes a package code for identifying the package and a transportation destination code for identifying a transportation destination. As the transportation destination code, for example, a zip code can be used. The measurement apparatus 10 has an upper housing10a and a lower housing 10b. A touch panel 11 is attached to the upper housing 10a in a state where a display surface of the touch panel 11 faces to the outside through the upper housing 10a.

The payment apparatus 20 performs a payment of a charge that is determined based on: the size and the weight that are measured by the measurement apparatus 10, invoice information that is recognized in the measurement apparatus 10, or invoice information that is separately input. A touch panel 21, an automatic change machine 22, a receipt printer 23, and a slip printer 24 are attached to a housing 20a of the payment apparatus 20 so that a portion of each of the touch panel 21, the automatic change machine 22, the receipt printer 23, and the slip printer 24 faces to the outside through the housing 20a.

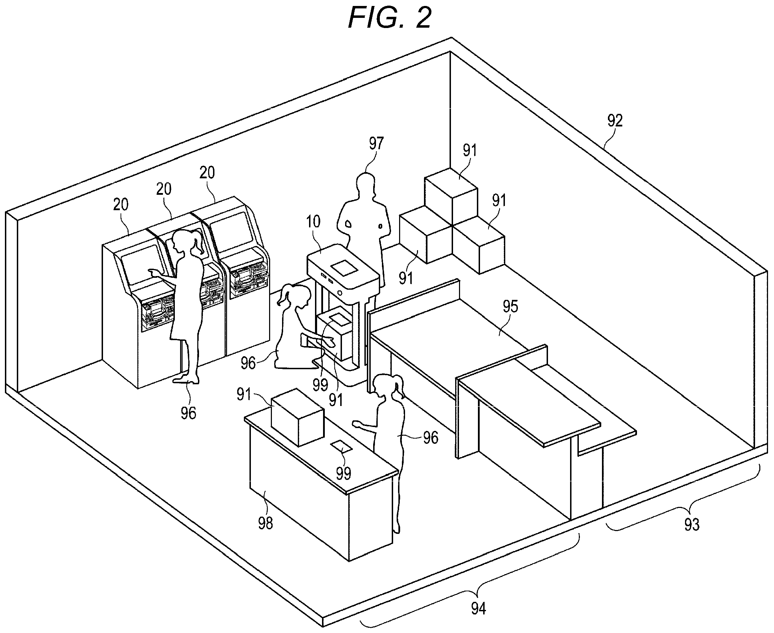

FIG. 2 is a perspective view illustrating an example of use of the package receiving system 100.

The measurement apparatus 10 is positioned on a border between a salesclerk area 93 and a customer area 94 in a store 92 that receives a request for transportation of the package 91. The measurement apparatus is also positioned by the side of a window counter 95 that separates the salesclerk area 93 from the customer area 94. The package 91 that is carried by a customer 96 into the store 92 is placed by the customer 96 on the measurement apparatus 10. The package 91 that is placed on the measurement apparatus 10 is removed by a salesclerk 97 from the measurement apparatus 10 to the salesclerk area 93 side.

The payment apparatus 20 is provided in the customer area 94. The customer 96 performs a payment of a charge that is determined based on a result of the measurement by the measurement apparatus 10, using the payment apparatus 20.

For example, an invoice 99 attached to the package placed on the measurement apparatus 10 may include the invoice information written by the customer 96 at a table 98 or at the customer's house, or the like. Alternatively, the invoice 99 may not be attached to the package 91 which is placed on the measurement apparatus 10.

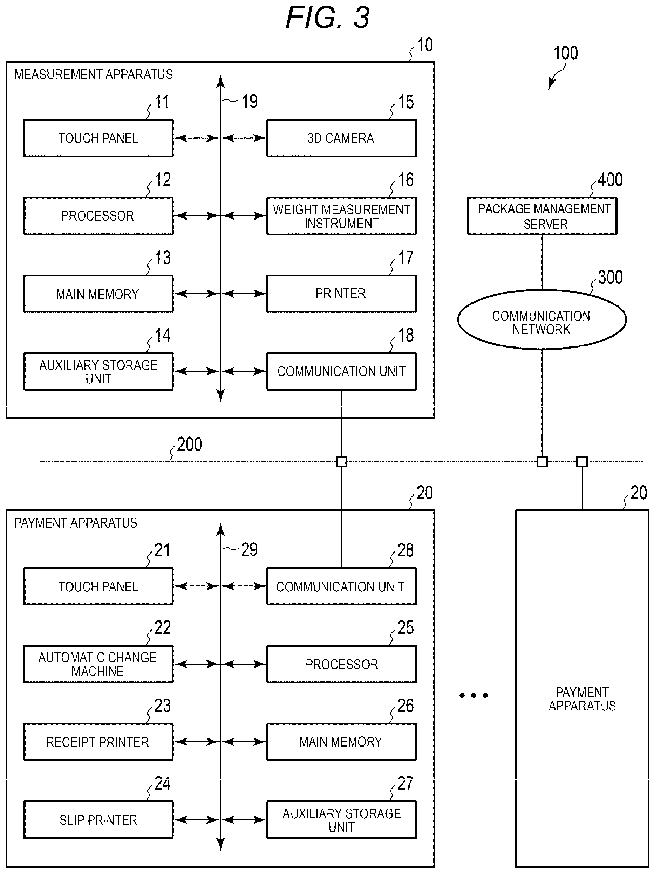

FIG. 3 is a block diagram illustrating example hardware configurations of the measurement apparatus 10 and the payment apparatus 20.

In addition to the touch panel 11, the measurement apparatus 10 includes a processor 12, a main memory 13, an auxiliary storage unit 14, a 3D camera 15, a weight measurement instrument 16, a printer 17, a communication interface 18, and a data path 19.

Various instructions that are performed by a touch operation by an operator of the measurement apparatus 10 are input into the touch panel 11. Various pieces of information are displayed to the operator on the touch panel 11. The operator of the measurement apparatus 10 may be any one of the customer 96 and the salesclerk 97.

The processor 12, the main memory 13, and the auxiliary storage unit 14 are connected to each other along the data path 19, and thus function as a computer that performs information processing for causing the measurement apparatus 10 to operate.

The processor 12 functions as a central component of the computer described above. The processor 12 controls the various components of the measurement apparatus 10 according to an operating system and an application program in order to realize various functions.

The main memory 13 functions as a main storage device of the computer described above. The main memory 13 includes a nonvolatile memory area and a volatile memory area. The operating system and the application program are stored in the nonvolatile memory area of the main memory 13. Furthermore, in some cases, data that is necessary while the processor 12 performs processing for controlling each component is also stored in the nonvolatile or volatile memory area of the main memory 13. The volatile memory area of the main memory 13 is used as a working area where data is suitably rewritten by the processor 12.

The auxiliary storage unit 14 functions as an auxiliary storage device of the computer described above. As the auxiliary storage unit 14, for example, electric erasable programmable read-only memories (EEPROM), hard disk drives (HDD), solid state drives (SSD), or various other well-known storage devices can be used. Data that is used while the processor 12 performs various types of processing and data that is generated by processing in the processor 12 are retained in the auxiliary storage unit 14. In some cases, the application program is also stored in the auxiliary storage unit 14.

The 3D camera 15 is attached to the upper housing 10a in a state where the 3D camera 15 captures an image facing downward from the upper housing 10a. The 3D camera 15 generates three-dimensional image data that includes depth-direction information.

The weight measurement instrument 16 is mounted in the lower housing 10b. The weight measurement instrument 16 measures a weight of the package 91 that is placed on the lower housing 10b, and outputs a measurement value.

The printer 17 prints an image on a sheet of printing paper.

The communication interface 18 performs data communication over a local area network (LAN) 200.

The data path 19 includes an address bus, a data bus, a control signal line, and the like, and transfers data or a control signal that is to be transferred and received between each of the components that are connected to each other.

In addition to the touch panel 21, the automatic change machine 22, the receipt printer 23, and the slip printer 24, the payment apparatus 20 includes a processor 25, a main memory 26, an auxiliary storage unit 27, a communication interface 28, and a data path 29.

Various instructions that are performed by a touch operation by an operator of the payment apparatus 20 are input into the touch panel 21. Various pieces of information are displayed to the operator on the touch panel 21. The operator of the payment apparatus 20 is mostly the customer 96, but in some cases, the operator is also the salesclerk 97.

The automatic change machine 22 receives money in the form of coins and banknotes that are inserted through a coin insertion slot and a banknote insertion slot. The automatic change machine 22 ejects money in the form of coins and banknotes, as change, from a coin ejection slot and a banknote ejection slot.

The receipt printer 23 prints a receipt evidencing a result of the payment and the reception of the package 91.

The slip printer 24 prints a slip that shows the invoice information. The slip is attached to the package 91 as the invoice 99.

The processor 25, the main memory 26, and the auxiliary storage unit 27 are connected to each other along the data path 29, and thus function as a computer that performs information processing for causing the payment apparatus 20 to operate.

The processor 25 functions as a central component of the computer described above. The processor 25 controls the various components of the payment apparatus 20 according to an operating system and an application program in order to realize various functions.

The main memory 26 functions as a main storage device of the computer described above. The main memory 26 includes a nonvolatile memory area and a volatile memory area. The operating system and the application program are stored in the nonvolatile memory area of the main memory 26. Furthermore, in some cases, data that is necessary while the processor 25 performs processing for controlling each component is also stored in the nonvolatile or volatile memory area of the main memory 26. The volatile memory area of the main memory 26 is used as a working area where data is suitably rewritten by the processor 25.

The auxiliary storage unit 27 functions as an auxiliary storage device of the computer described above. As the auxiliary storage units 27, for example, EEPROMs, HDDs, SSDs, or various other well-known storage devices can be used. Data that is used while the processor 25 performs various types of processing and data that is generated by processing in the processor 25 are retained in the auxiliary storage unit 27. In some cases, the application program is also stored in the auxiliary storage unit 27.

The communication interface 28 performs data communication with the measurement apparatus 10 over a LAN 200. The communication interface 28 performs the data communication with a package management server 400 over the LAN 200 and a communication network 300.

The data path 29 includes an address bus, a data bus, a control signal line, and the like, and transfers data or a control signal that is to be transferred and received between each of the units that are connected to each other.

The communication network 300, for example, may perform the data communication over the Internet, a virtual private network (VPN), and the like. The package management server 400 manages a package transportation status.

Next, operation of the package receiving system 100 as described above will be described.

When the measurement apparatus 10 is in an operation state, the processor 12 performs the information processing, as will be described below, according to the application program. Details of the processing, which will be described below, are an example, and various processing operations that possibly obtain the same result can be suitably used.

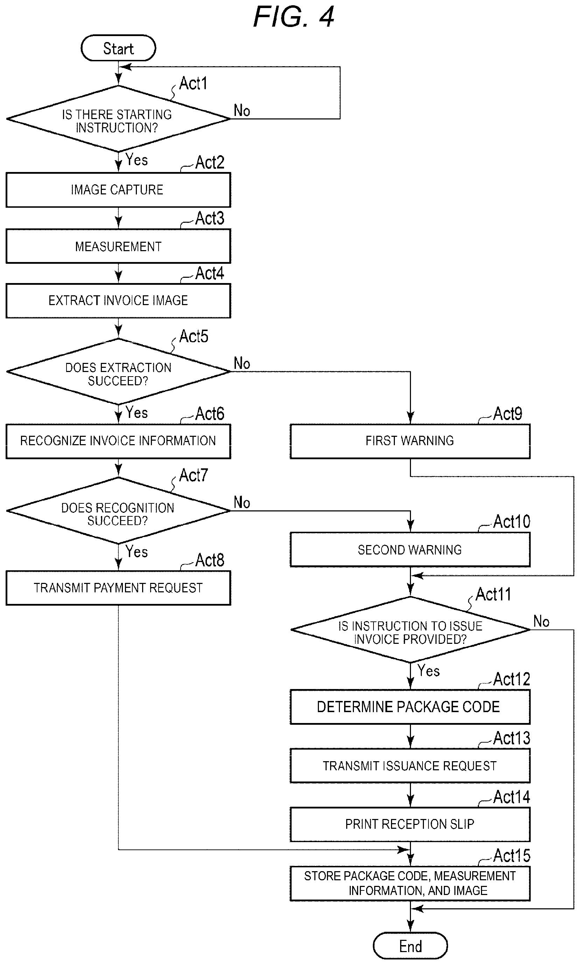

FIG. 4 is a flowchart for the information processing by the processor 12.

In Act 1, the processor 12 waits for the operator to perform a starting instruction. At this time, the processor 12, for example, causes a waiting screen to be displayed on the touch panel 11. The waiting screen is a screen that guides the customer 96 to touch on a starting button on the waiting screen, after placing the package 91 on the lower housing 10b. When the customer 96 performs an operation in accordance with the guidance on the waiting screen, the touch on the starting button is detected by the touch panel 21. According to the detection, the processor 12 determines that a result is Yes, and proceeds to Act 2. At this time, the processor 12 may determine that the result is Yes only if a measurement value of a weight in the weight measurement instrument 16 is at or above a predetermined threshold.

In Act 2, the processor 12 causes the 3D camera 15 to capture an image. The 3D camera 15 captures an image of the package 91 that is placed on the lower housing 10b and generates image data. The processor 12 causes the image data generated by the 3D camera 15, to be temporarily stored in the main memory 13 or the auxiliary storage unit 14.

In Act 3, the processor 12 analyses the image data described above and thereby measures a size of the package 91. As analysis processing for this purpose, well-known processing can be performed. Furthermore, the processor 12 acquires a measurement value of a weight of the package 91 from the weight measurement instrument 16. Accordingly, the processor 12 executes the application program, and thus the computer having the processor 12 as the central component functions as a measurement unit that measures the size of the package 91. Similarly, the computer having the processor 12 as the central component functions as an acquisition unit that acquires the measurement value of the weight of the package 91.

In Act 4, the processor 12 attempts to extract an invoice image from the generated image data described above. The invoice image is an image of an area where the invoice 99 is reflected, in the image data. Well-known image processing technology can be applied to for the extraction of the invoice image. Accordingly, the processor 12 executes the application program, and thus the computer having the processor 12 as the central component functions as an extraction unit that extracts the invoice 99 from the captured image of the package 91.

In Act 5, the processor 12 checks whether or not the extraction of the invoice image succeeds. Then, if the extraction of the invoice image succeeds, it is determined that a result is Yes, and the processor 12 proceeds to Act 6. That is, if an image of the invoice 99 attached to the package 91 can be extracted from the captured image, the processor 12 proceeds to Act 6.

In Act 6, the processor 12 recognizes the invoice information that is described in the invoice 99, from the extracted invoice image. Well-known character recognition processing can be performed for this recognition.

In Act 7, the processor 12 checks whether or not all pieces of information that should be included in the invoice information can be recognized. Then, if all pieces of information can be recognized, it is determined that a result is Yes and the processor 12 proceeds to Act 8.

In Act 8, the processor 12 transmits a payment request to one predetermined payment apparatus 20 among a plurality of payment apparatuses 20, via the communication interface 18 to the LAN 200. The payment request is data that includes the size and the measurement value that are obtained in Act 3, and the invoice information that is recognized in Act 6, and that requests the payment apparatus 20 to perform payment processing. The processor 12 may determine a charge from the size and the measurement value that are obtained in Act 3 and the invoice information that is recognized in Act 6 and may include data showing the charge in the request to perform payment processing. The request to perform payment processing is transferred to the LAN 200 and is received by the communication interface 28 of the payment apparatus 20 described above. The package 91 is removed by the salesclerk 97 from the measurement apparatus 10 and is kept in the salesclerk area 93. The payment request described above is processing that is performed only if the invoice 99 is attached to the package 91. More precisely, the payment request is a part of first processing.

With respect to the package 91 that is placed on the measurement apparatus 10, there are two cases. In one case, the invoice 99 is attached, and in the other case, the invoice 99 is not attached. If the invoice 99 is not attached to the package 91, the processor 12 cannot extract the invoice image in Act 4. Accordingly, in the case that the invoice 99 is not attached to the package 91, the processor 12 determines in Act 5 that a result is No, and proceeds to Act 9.

In Act 9, the processor 12 issues a first warning. The first warning is for notifying the customer 96 that the invoice 99 is not attached to the package 91. The processor 12, for example, controls the touch panel 11 to display a warning screen, which includes a character message that indicates that the invoice 99 is not attached to the package 91, and a graphical user interface (GUI) that allows the customer 96 to provide an instruction as to whether or not the invoice 99 is issued in the payment apparatus 20.

As described above, if the invoice 99 is attached to the package 91, the processor 12 recognizes the invoice information in the invoice 99. If the invoice 99 is not attached, the processor 12 issues a warning that the invoice 99 is not attached. In this respect, the processing that recognizes the invoice information is a first processing, and the processing that issues the warning is a second processing. As such, the processor 12 executes the application program, and thus the computer having the processor 12 as the central component functions as a performance unit that performs each of the processing processes described above.

Incidentally, even if the invoice 99 is attached to the package 91, the entire invoice information may not necessarily be correctly described. Then, if the description of the invoice information is insufficient, the processor 12 determines in Act 7 that a result is No, and proceeds to Act 10.

In Act 10, the processor 12 issues a second warning. The second warning is for notifying the customer 96 that the description in the invoice 99 is not correct. The processor 12, for example, controls the touch panel 11 to display a warning screen, which includes a character message that indicates that the description in the invoice 99 is not correct, and the GUI that allows the customer 96 to provide the instruction as to whether or not the invoice 99 is issued in the payment apparatus 20.

After the first or second warning is issued in Act 9 or Act 10, the processor 12 proceeds to Act 11.

In Act 11, the processor 12 checks whether or not an instruction to issue the invoice is provided. Then, if the instruction to issue the invoice is provided via the GUI that is included with the warning screen, the processor 12 determines that a result is Yes, and proceeds to Act 12.

In Act 12, according to a predetermined rule, the processor 12 determines a package code, which is different from a previously used package code, of the package 91 that is placed on the lower housing 10b.

In Act 13, the processor 12 transmits an issuance request, which is destined for a predetermined payment apparatus 20 out of the plurality of payment apparatuses 20, from the communication interface 18 to the LAN 200. The issuance request includes the size and the measurement value which are measured in Act 3, and requests the payment apparatus 20 to issue the invoice 99 after the payment processing with respect to the charge is performed. The issuance request is transferred to the LAN 200 and is received by the communication interface 28 of the destination payment apparatus 20 described above.

As described above, if the invoice 99 is attached to the package 91, the processor 12 transmits the payment request. If the invoice 99 is not attached, the processor 12 transmits the issuance request. As described above, the payment request is a request to the payment apparatus 20 for the performance of the payment processing, and the issuance request is a request to the payment apparatus 20 not only for the performance of the payment processing, but also for the issuance of the invoice. In this respect, the transmission of the payment request is a first processing, and the transmission of the issuance request is a second processing. As such, the processor 12 executes the application program, and thus the computer having the processor 12 as the central component functions as the performance unit that performs each of the processing processes described above.

Furthermore, if the invoice 99 is attached to the package 91, the processor 12 transmits the payment request without receiving the instruction of the operator. If the invoice 99 is not attached, the processor 12 transmits the issuance request if the instruction of the operator is received. Any one of the payment request and the issuance request may be deemed a request to the payment apparatus 20 for the performance of the payment processing. More precisely, if the invoice 99 is attached to the package 91, the processor 12 performs the first processing without receiving the instruction of the operator. If the invoice 99 is not attached, the processor 12 performs the second processing according to the instruction of the operator. In this respect, the computer having the processor 12 as the central component functions as the performance unit that performs the processing described above.

In Act 14, the processor 12 causes the printer 17 to print a reception slip. The reception slip shows at least the package code that is determined in Act 12. The reception slip is tentatively attached by the salesclerk 97 to the package 91 in order to manage the package 91 during the time that it takes to attach the invoice 99 that is issued in the payment apparatus 20, as will be described below. The package 91 is removed by the salesclerk 97 from the measurement apparatus 10 and is kept in the salesclerk area 93.

Thereafter, the processor 12 proceeds to Act 15. Also if the transmission of the payment request is finished in Act 8, the processor 12 proceeds to Act 15.

In Act 15, the processor 12 stores, in the auxiliary storage unit 14, the measurement information obtained in Act 3, and the image data that is generated in Act 2, in association with the package code that is recognized in Act 6 or the package code that is determined in Act 12. Then, the processor 12 ends the information processing that is illustrated in FIG. 4. The information processing that is illustrated in FIG. 4 is performed repeatedly, and the processor 12 therefore repeatedly performs the storing as well. In principle, the processor 12 stores new measurement information and image data without deleting the measurement information and the image data that were retained in the past. However, if a predetermined condition is satisfied, such as if an amount of free space in the auxiliary storage unit 14 is small, new measurement information and image data may be stored after the measurement information and the image data that were stored in the past are deleted, or by overwriting the measurement information and the image data.

If an instruction that the invoice is not issued is provided using the GUI that is included with the warning screen, the processor 12 determines in Act 11 that a result is No, and ends the information processing that is illustrated in FIG. 4, without performing Act 12 to Act 15. In this case, the package 91 is removed by the customer 96 from the measurement apparatus 10.

The processor 12 may wait for the measurement value of the weight in the weight measurement instrument 16 to be below a threshold due to the removal of the package 91 from the measurement apparatus 10, and may end the information processing that is illustrated in FIG. 4. If the information processing that is illustrated in FIG. 4 is temporarily ended, the processor 12 starts the information processing at a suitable timing. In restarting the information processing that is illustrated in FIG. 4, the processor 12 may check whether or not a predetermined condition is satisfied, for example, such as whether or not the measurement value of the weight in the weight measurement instrument 16 is below the threshold.

When the payment apparatus 20 is in the operation state, the processor 25 performs the information processing, as will be described below, according to the application program. Details of the processing, which will be described below, are an example, and various processing operations that possibly obtain the same result can be suitably used.

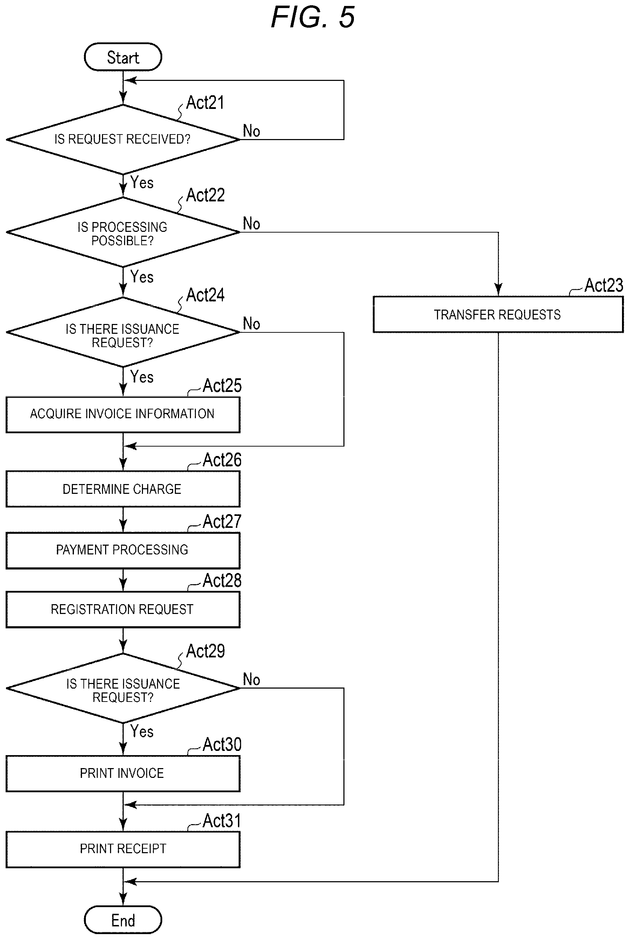

FIG. 5 is a flowchart for the information processing by the processor 25.

In Act 21, the processor 25 waits for the payment request or the issuance request, which are described above, to be received. Then, if the payment request or the issuance request is received by the communication interface 28, the processor 25 determines that a result is Yes, and proceeds to Act 22.

In Act 22, the processor 25 checks whether or not the payment apparatus 20, in which the processor 25 is included, is able to perform an operation for the payment processing. Then, for example, if an obstacle that is determined in advance occurs, for example, such as when the automatic change machine 22 runs short of change, the processor 25 determines that a result is No, and proceeds to Act 23.

In Act 23, the processor 25 transfers the received payment request or the issuance request described above to a different predetermined payment apparatus 20 that is determined in advance. Then, if the transfer of the payment request or the issuance request is finished, the processor 25 ends the information processing that is illustrated in FIG. 5. The measurement apparatus 10 may also be a transfer destination of the payment request or the issuance request. Then, in this case, if the payment request or the issuance request is received by the communication interface 18, the processor 12 in the measurement apparatus 10 again transfers the payment request or the issuance request to a different predetermined payment apparatus 20.

If the payment apparatus 20 in which the processor 25 in question is included is able to perform the operation for the payment processing, the processor 25 determines in Act 22 that a result is Yes, and proceeds to Act 24. At this time, the processor 25 may notify the measurement apparatus 10 that the request is received. Then, in this case, the processor 12 in the measurement apparatus 10 may cause the touch panel 11 to display a screen indicating the payment apparatus 20 out of the plurality of payment apparatuses 20at which the payment processing is to be performed. Alternatively, the processor 25 in the payment apparatus 20 may cause the touch panel 21 to display a screen to show a state in which the payment processing is performed. Alternatively, the processor 12 in the measurement apparatus 10 may include the image data that is acquired in Act 2, in the payment request or the issuance request. In such a case, the processor 25 in the payment apparatus 20 may cause an image corresponding to the image data, more precisely, an image in which the package 91 is included, to be displayed on the touch panel 21, and may notify the customer 96 for which the package 91 is received and the payment processing of the charge is about to be performed.

In Act 24, the processor 25 checks whether or not the request that is received is the issuance request. Then, if the received request is the issuance request, the processor 25 determines that a result is Yes, and proceeds to Act 25.

In Act 25, the processor 25 acquires the invoice information. As an example, the processor 25 controls the touch panel 21 to display an input form for causing the customer 96 to input various pieces of information that have to be described in the invoice 99. Then, the processor 25 acquires various pieces of information that are input using the touch panel 21 based on an operation in accordance with the input form, and defines a set of these pieces of information as the invoice information. If the acquisition of the invoice information is finished, the processor 25 proceeds to Act 26. If the received request is the payment request, the processor 25 determines in Act 24 that a result is No, omits Act 25, and proceeds to Act 26.

In Act 26, if the received request is the payment request, the processor 25 determines a charge based on the size and the measurement value that are included in the payment request and the transportation destination code that is included in the invoice information which is included in the payment request. Furthermore, if the received request is the issuance request, the processor 25 determines the charge based on the size and the measurement value that are included in the issuance request and the transportation destination code that is included in the invoice information which is acquired in Act 25.

In Act 27, the processor 25 performs payment processing for performing the payment of the charge described above that is determined. Specifically, the processor 25 activates the automatic change machine 22 and causes the automatic change machine 22 to receive money that is equal to the charge described above that is determined. For example, a reader/writer for electronic money may be provided in addition to the payment apparatus 20 and the payment of the charge described above that is determined may be performed using electronic money. Alternatively, the payment may be performed using various other well-known payment methods, such as a credit card payment, and a debit card payment.

In Act 28, the processor 25 transmits a registration request, which is destined for the package management server 400, from the communication interface 28 to the LAN 200. The registration request includes at least the package code and an identification code of the payment apparatus 20, and is for requesting the package management server 400 to start managing the transportation of the package 91. The registration request is transferred to the LAN 200 and the communication network 300, and is received by the package management server 400. The package management server 400 adds the package code that is included in the registration request to a management database. Furthermore, the package management server 400 assumes that a status data which is indicated in the management database with respect to the package corresponding to the package code is data indicating that the package is retained in a store where the payment apparatus 20 that is identified with the identification code which is included in the registration request is installed. The status data is suitably changed during transportation the package 91 that is identified with the associated package code. In other words, by adding the package code to the management database, the management relating to the transportation of the package 91 that is identified with the package code is started. Accordingly, the reception of the package 91 for transportation is completed.

In Act 29, the processor 25 checks whether or not the request that is received is the issuance request. Then, if the received request is the issuance request, the processor 25 determines that a result is Yes, and proceeds to Act 30.

In Act 30, the processor 25 causes the slip printer 24 to print the invoice 99 that indicates the invoice information which is acquired in Act 25. If the printing is ended, the processor 25 proceeds to Act 31. At this time, the processor 25 may indicate at least one of the size and the measurement value, which are included in the payment request or the issuance request, in the invoice 99. If the request that is received is the payment request, the processor 25 determines in Act 29 that a result is No, omits Act 30, and proceeds to Act 31.

In Act 31, the processor 25 causes the receipt printer 23 to print the receipt evidencing the result of the payment and the reception of the package 91. The receipt printer 23 may print one receipt evidencing both of the result of the payment processing and the reception of the package 91, or may print separate receipts evidencing the result of the payment processing or the reception of the package 91. Then, the processor 25 ends the information processing that is illustrated in FIG. 5. If the information processing that is illustrated in FIG. 5 is temporarily ended, the processor 25 restarts the information processing at a suitable timing. In restarting the information processing that is illustrated in FIG. 5, the processor 25 may check whether or not a predetermined condition is satisfied, for example, such as whether or not the invoice 99 and the receipt are taken away.

If the invoice 99 is printed, the customer 96 hands over the invoice 99 to the salesclerk 97. The salesclerk 97 refers to the package code described in the handed-over invoice 99 and matches it to the package code that is indicated in the reception slip that is attached to the package 91 that was completely received. That is, the salesclerk 97, and searches the completely-received packages 91 for the package 91 in question and attaches the invoice 99 to the found package 91.

As described above, with the package receiving system 100, in most cases, the operation by the customer 96 minimizes the involvement of the salesclerk 97 and thus receiving the package 91 for transportation is efficiently performed.

In addition, with the package receiving system 100, in the measurement apparatus 10, it is checked whether or not the invoice 99 is attached to the package 91, based on the image data that is obtained as a result of the image capture by the 3D camera 15 in order to measure the size of the package 91. Then, in the measurement apparatus 10, if the invoice 99 is attached, the payment apparatus 20 is requested to perform the payment processing that is based on the invoice information that is described in the invoice 99. Furthermore, in the measurement apparatus 10, if the invoice 99 is not attached, the first warning is issued. Accordingly, if the customer 96 forgets to attach the invoice 99, the customer 96 can recognize that the invoice 99 is not attached.

Furthermore, in the measurement apparatus 10, if the invoice 99 is attached, the payment request is sent to the payment apparatus 20. If the invoice 99 is not attached, the issuance request is sent to the payment apparatus 20. Then, in the payment apparatus 20, in response to the issuance request, the invoice is issued after the payment processing is completed. However, in response to the payment request, the invoice is not issued after the payment is completed. For this reason, the customer 96 can use the invoice on which necessary information is written by the customer 96 himself/herself, or can use the invoice that is issued in the payment apparatus 20.

Furthermore, in the measurement apparatus 10, although the invoice 99 is attached to the package 91, if necessary information cannot be recognized from the invoice 99, the issuance request is made to the payment apparatus 20. For this reason, switching to the use of the invoice that is issued in the payment apparatus 20 is possible without the need for the customer 96 to again fill out the invoice 99.

Furthermore, in the measurement apparatus 10, if the invoice 99 is not attached to the package 91, or if the invoice 99 is attached but necessary information cannot be recognized, it is determined whether or not the invoice 99 is issued in the payment apparatus 20, according to the operation by the operator. For this reason, if the customer 96 wants to use the invoice 99 that the customer 96 himself/herself newly fills in, or the invoice 99 that results from amending the invoice that the customer 96 himself/herself has filled in, the customer 96 can set the invoice 99 not to be issued in the payment apparatus 20.

Furthermore, in the measurement apparatus 10, the image data which includes an image of the package 91, and the measurement information that includes the size and the weight of the package 91 included in the image data are stored in a state of being associated with the package code for identifying the package 91. For this reason, based on the data that is retained in this manner, it is possible to check which package 91 is received as identified with a certain package code. Then, accordingly, for example, if it is suspected that there is fraud carried out, such as replacement of the invoice 99, it is possible to verify the validity of the invoice 99.

Various modifications to this embodiment are possible as follows.

At least one of the touch panel 11, the auxiliary storage unit 14, the 3D camera 15, the weight measurement instrument 16, and the printer 17 may not be included in the measurement apparatus 10. For example, a touch panel, a storage unit, a 3D camera, a weight measurement instrument, and a printer that are independent may be externally attached to the measurement apparatus 10.

At least one of the touch panel 21, the automatic change machine 22, the receipt printer 23, the slip printer 24, and the auxiliary storage unit 27 may not be included in the payment apparatus 20. For example, a touch panel, an automatic change machine, a receipt printer, a slip printer, and a storage unit that are independent may be externally attached to the payment apparatus 20.

The measurement apparatus 10 and the payment apparatus 20 may be integrated into one piece.

The processor 12 may cause a result of the measurement in Act 3 to be displayed on the touch panel 11 or a display device that is separately provided for the salesclerk 97.

One or several of the information processing operations described above that are performed by the processor 12 may be omitted. For example, if it is determined in Act 5 or Act 7 that the result is No, the processor 12 may proceed to Act 12 without performing the checking in Act 11. Furthermore, the processor 12 may not perform at least one of Act 9 and Act 10. Furthermore, Act 14 may be omitted. Furthermore, Act 15 may be omitted.

The storing of the measurement information and the image data in the state of being associated with the package code may be performed in the auxiliary storage unit 27 in the payment apparatus 20. In this case, the processor 12 in the measurement apparatus 10 includes the image data in the payment request and the issuance request. Alternatively, the processor 25 may make a request to the measurement apparatus 10 for the transmission of the image data, and in response to the request, the processor 12 may transmit the image data to the payment apparatus 20 that is a request source, separately from the payment request and the issuance request.

How the payment request and the issuance request are provided from the measurement apparatus 10 to the payment apparatus 20 may be arbitrarily determined.

Instead of the image that is captured by the 3D camera 15, an image may be used that is obtained by image-capturing the package 91 from a plurality of directions using a two-dimensional image capture-type camera while causing the camera to be moved or causing the package 91 to be rotated. Alternatively, instead of the image that is captured by the 3D camera 15, an image may be used that is obtained by image-capturing the package 91 from a plurality of directions using a plurality of two-dimensional image capture-type cameras.

If a charge schedule which does not include classification according to weight is applied, in Act 26, the processor 25 may determine the charge without adding the measurement value of the weight. In this case, not only may the weight measurement instrument 16 be omitted, but the measurement value of the weight may also be omitted from the measurement information in the processor 12. Furthermore, if the charge schedule does not include classification according to transportation distance is applied, in Act 26, the processor 25 may determine the charge without adding the transportation destination code. In this case, the processor 12 may exclude the transportation destination code from recognition targets in Act 6. Furthermore, the processor 25 may exclude the transportation destination code from acquisition targets in Act 25.

The application program relating to the information processing that is illustrated in FIG. 4 or 5 may be stored in the main memory 13 or the main memory 26 when the hardware of the measurement apparatus 10 or the payment apparatus 20 is delivered, and may be provided separately from the hardware described above. In the case of the latter, the application program may be provided in a state of being recorded on a removable recording medium, such as a magnetic disk, an optical-magnetic disk, an optical disk, or a semiconductor memory, or may be delivered over a network.

It is also possible that one or several portions or all portions of each function that is realized by the processor 12 or 25 performing the information processing is realized by hardware that performs the information processing not based on the program, such as a logic circuit. Furthermore, it is also possible that each function described above is realized by combining software control with the hardware such as the logic circuit described above.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A package measurement apparatus comprising:
a housing that supports a package to be placed thereon;
a touch panel display mounted on the housing;
a camera positioned to capture an image of the package when the package is supported on the housing and configured to generate image data corresponding to the captured image; and
a processor configured to:
receive the generated image data,
determine a size of the package based on the image data,
determine if an image of an invoice on the package can be extracted from the image data,
if the image of the invoice can be extracted from the image data, extract the image of the invoice and output a payment request to a payment device, the payment request including instructions to perform a payment processing based on the extracted image of the invoice, and
if the image of the invoice cannot be extracted from the image data, output an issuance request to a printing device, the issuance request including instructions to print an invoice based on the determined size of the package.

2. The apparatus according to claim 1, wherein the processor is further configured to, if the image of the invoice cannot be extracted from the image data, output a notification to a user that the invoice is not attached to the package.

3. The apparatus according to claim 2, wherein:
the processor is further configured to, if the image of the invoice can be extracted from the image data:
after extracting the image of the invoice from the image data, determine whether complete invoice information can be determined from the extracted image of the invoice,
if the complete invoice information cannot be determined from the extracted image of the invoice, output, for display on the touch panel display, a notification to the user that the invoice information is incomplete, and
if the complete invoice information can be determined from the extracted image of the invoice, output the payment request to the payment device.

4. The apparatus according to claim 3, wherein:
if the image of the invoice cannot be extracted from the image data, or if the complete invoice information cannot be determined from the extracted image of the invoice, the processor controls the touch panel display to display a graphic user interface (GUI) allowing the user to select whether to complete the invoice information via the payment apparatus or to end processing.

5. The apparatus according to any one of claims 1 to 4, further comprising:
a weight measurement instrument configured to acquire a weight measurement of the package positioned on the housing, wherein
the processor is further configured to receive the weight measurement, the issuance request being further based on the received weight measurement.

6. The apparatus according to any one of claims 1 to 5, wherein the issuance request further includes instructions to perform the payment processing based on the determined size of the package.

7. The apparatus according to any one of claims 1 to 6, further comprising:
a printer, wherein
the processor is further configured to, if the image of the invoice cannot be extracted, control the printer to print a reception slip including a package code, the issuance request further including instructions to print the package code with the invoice.

8. The apparatus according to claim 7, further comprising:
a communication interface configured to communicate with a package management server, wherein
the processor is further configured to transmit, to the package management server, the package code, the generated image data, and invoice data based on one of: the issuance request and the extracted image of the invoice.

9. A method of measuring a package using a package measurement apparatus that includes a housing that supports a package placed thereon, a touch panel display mounted on the housing, and a camera positioned to capture an image of a package placed on the housing, the method comprising:
generating image data corresponding to the image of the package captured by the camera;
determining a size of the package based on the image data;
determining if an image of an invoice on the package can be extracted from the image data;
if the image of the invoice can be extracted from the image data, extracting the image of the invoice and outputting a payment request to a payment device, the payment request including instructions to perform a payment processing based on the extracted image of the invoice; and
if the image of the invoice cannot be extracted from the image data, outputting an issuance request to a printing device, the issuance request including instructions to print an invoice based on the determined size of the package.

10. The method according to claim 9, further comprising:
if the image of the invoice can be extracted from the image data:
after extracting the image of the invoice from the image data, determining whether complete invoice information can be determined from the extracted image of the invoice,
if the complete invoice information cannot be determined from the extracted image of the invoice, outputting, for display on the touch panel display, a notification to the user that the invoice information is incomplete, and
if the complete invoice information can be determined from the extracted image of the invoice, outputting the payment request to the payment device.

11. The method according to claim 10, further comprising:
if the image of the invoice cannot be extracted from the image data, or if the complete invoice information cannot be determined from the extracted image of the invoice, displaying on the touch panel display a graphic user interface (GUI) allowing the user to select whether to complete the invoice information via the payment apparatus or to end processing.

12. The method according to any one of claims 9 to 11, further comprising:
acquiring a weight measurement of the package positioned on the housing, wherein the issuance request is further based on the acquired weight measurement.

13. The method according to any one of claims 9 to 12, further comprising:
if the image of the invoice cannot be extracted from the image data, controlling a printer in the package measurement apparatus to print a reception slip including a package code, the issuance request further including instructions to print the package code with the invoice.

14. The method according to claim 13, further comprising:
transmitting, to a package management server, the package code, the generated image data, and invoice data based on one of the issuance request and the extracted image of the invoice.

15. The method according to any one of claims 9 to 14, wherein the generated image data corresponding to the image of the package captured by the camera is three-dimensional image data that includes depth-direction information.
